(19) **Europäisches Patentamt**
**European Patent Office**
**Office européen des brevets**

(11)  **EP 4 361 563 B1**

(12) **FASCICULE DE BREVET EUROPEEN**

(45) Date de publication et mention
de la délivrance du brevet:
**11.02.2026  Bulletin 2026/07**

(21) Numéro de dépôt: **23206161.4**

(22) Date de dépôt: **26.10.2023**

(51) Classification Internationale des Brevets (IPC):
**G01C 21/00** *(2006.01)*      **G01S 5/16** *(2006.01)*

(52) Classification Coopérative des Brevets (CPC):
**G01C 21/005; G01S 5/16; G01S 5/163;**
G01S 5/0247; G01S 5/08

(54) **PROCÉDÉ DE RECALAGE SUR UNE PLURALITÉ D'AMERS, PRODUIT PROGRAMME D'ORDINATEUR ET DISPOSITIF DE RECALAGE ASSOCIÉS**

VERFAHREN ZUR NEUKALIBRIERUNG AN EINER VIELZAHL VON ORIENTIERUNGSPUNKTEN, ENTSPRECHENDES COMPUTERPROGRAMMPRODUKT UND ZUGEHÖRIGE NEUKALIBRIERUNGSVORRICHTUNG

METHOD FOR RECALIBRATION OVER A PLURALITY OF LANDMARKS, ASSOCIATED COMPUTER PROGRAM PRODUCT AND RECALIBRATION DEVICE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **26.10.2022  FR 2211132**

(43) Date de publication de la demande:
**01.05.2024  Bulletin 2024/18**

(73) Titulaire: **THALES**
**92190 Meudon (FR)**

(72) Inventeur: **HEURGUIER, Dominique**
**92622 GENNEVILLIERS CEDEX (FR)**

(74) Mandataire: **Lavoix**
**2, place d'Estienne d'Orves**
**75441 Paris Cedex 09 (FR)**

(56) Documents cités:
**FR-A1- 3 114 659       FR-A1- 3 116 602**
**FR-A1- 3 118 523       US-A1- 2019 072 392**
**US-A1- 2021 375 145**

**Description**

La présente invention concerne un procédé de recalage sur une pluralité d'amers.

La présente invention concerne également un produit programme d'ordinateur et un dispositif de recalage associés à ce procédé de recalage.

Plus particulièrement, l'invention est applicable lors de la géolocalisation d'un dispositif mobile, notamment d'un engin mobile tel qu'un véhicule ou un aéronef, à l'aide des amers.

Par « amer », on entend tout objet naturel ou artificiel repérable par le dispositif mobile et dont la position est connue ou déterminable.

Selon des méthodes de relèvement déjà connues dans l'état de la technique, il est possible de géolocaliser un dispositif mobile ou de recaler sa position déterminée par un autre moyen, en utilisant une pluralité d'amers.

Pour ce faire, le dispositif mobile est généralement apte à mesurer des directions (sites ou gisements) par rapport aux amers et/ou des distances jusqu'à ceux-ci. Ainsi, en analysant ces mesures et les positions connues des amers, il est possible généralement de déterminer ou de préciser la position du dispositif mobile.

Au moins certaines de ces méthodes sont décrites par exemple dans FR 3 118 523 A1, US 2021/375145 A1, FR 3 116 602 A1, FR 3 114 659 A1 et US 2019/072392 A1.

Toutefois, ces méthodes de relèvement, lorsqu'elles sont utilisées sans dispositif additionnel tel qu'une centrale inertielle, ne permettent généralement de résoudre le problème de géolocalisation du dispositif mobile qu'en cas bidimensionnel.

En revanche, il n'existe pas de méthode connue de géolocalisation tridimensionnelle permettant à partir de mesures de relevés angulaires seuls (gisement et site) de réaliser une géolocalisation en position tridimensionnelle et en attitude tridimensionnelle (cap, roulis, tangage).

La présente invention a pour but de proposer une solution permettant de géolocaliser un dispositif mobile dans l'espace tridimensionnel en utilisant seulement des mesures de relevés angulaires (gisement et site).

À cet effet, l'invention a pour objet un procédé de recalage conforme à la revendication 1.

Suivant d'autres aspects avantageux de l'invention, le procédé comprend des caractéristiques des revendications 2 à 8.

La présente invention a également pour objet un produit programme d'ordinateur selon la revendication 9, comportant des instructions logicielles qui, lorsque mises en œuvre par un équipement informatique, mettent en œuvre le procédé tel que défini précédemment.

La présente invention a également pour objet un dispositif , selon la revendication 10, de recalage sur une pluralité d'amers lors de la géolocalisation d'un dispositif mobile, comprenant des moyens techniques adaptés pour mettre en œuvre le procédé tel que défini précédemment.

Ces caractéristiques et avantages de l'invention apparaitront à la lecture de la description qui va suivre, donnée uniquement à titre d'exemple non limitatif, et faite en référence aux dessins annexés, sur lesquels :

- [Fig 1] la figure 1 est une vue schématique d'un dispositif de recalage selon l'invention ; et
- [Fig 2] la figure 2 est un organigramme d'un procédé recalage selon l'invention, le procédé étant mis en œuvre par le dispositif de recalage de la figure 1.

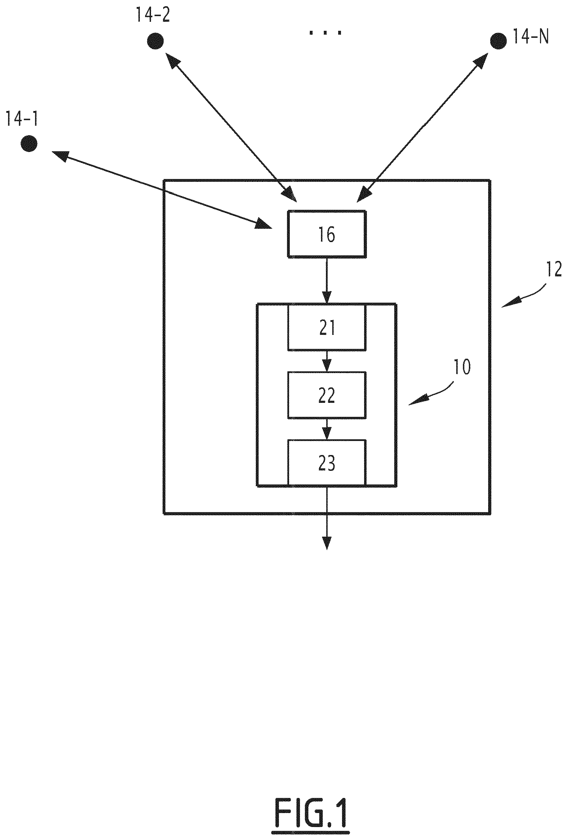

On a en effet représenté sur la figure 1, un dispositif de recalage 10 selon l'invention apte à déterminer ou à préciser la position d'un dispositif mobile 12 à chaque instant. Le dispositif mobile 12 est apte à se déplacer par exemple selon deux ou trois degrés de liberté par exemple dans un repère terrestre.

Selon un exemple de réalisation, le dispositif mobile 12 est un engin mobile, tel que par exemple un véhicule terrestre ou un aéronef, embarquant le dispositif de recalage 10. Dans le cas d'un aéronef, il peut s'agir d'un avion ou d'un hélicoptère pilotable par un opérateur et/ou par un système avionique à partir de celui-ci, ou d'un drone pilotable à partir d'un centre de contrôle distant par un opérateur et/ou par un système avionique adapté.

Selon un autre exemple de réalisation, le dispositif mobile 12 est porté par un opérateur ou par tout autre utilisateur et présente par exemple un téléphone portable. Dans ce cas, le dispositif de recalage 10 est par exemple intégré dans le dispositif mobile 12.

Le dispositif de recalage 10 est apte à déterminer la position du dispositif mobile 12 en utilisant des mesures de visée prises par rapport aux amers 14-1,...,14-N par au moins certains des capteurs d'une pluralité de capteurs 16.

Chaque amer 14-1,...,14-N présente un objet naturel ou artificiel disposé par exemple de manière fixe sur la surface terrestre selon une position connue avec une précision également connue et repérable depuis le dispositif mobile 12. Ainsi, chaque amer présente par exemple un pylône, une éolienne, un phare, un bâtiment, une montagne, un rocher, etc.

Chaque amer 14-1,...,14-N est par exemple identifiable par un identifiant qui lui est propre. En outre, selon un mode de réalisation particulier de l'invention, l'identifiant de chaque amer 14-1,...,14-N permet d'obtenir sa position en utilisant par exemple une base de données de positions prévue à cet effet. Une telle base de données peut être publiquement accessible ou alors, présenter un accès restreint.

Au moins certains des capteurs 16 sont aptes à déterminer des mesures de visée en relation avec chacun des amers 14-1,...,14-N.

Avantageusement selon l'invention, chaque mesure de visée déterminée par les capteurs 16 correspondants correspond à une mesure de gisement ou à une mesure de site, par rapport à un repère de référence.

Le repère de référence est par exemple lié au dispositif mobile 12 et dans le cas d'un engin mobile, présente par exemple un axe coïncidant avec le cap de cet engin. Selon un autre exemple, le repère de référence présente un repère terrestre.

Comme cela est visible sur la figure 1, le dispositif de recalage 10 comprend un module d'entrée 21, un module de calcul 22 et un module de sortie 23.

Le module d'entrée 21 est connecté aux capteurs 16 et est apte à acquérir l'ensemble des mesures déterminées par ces capteurs 16. Selon un exemple de réalisation, le module d'entrée 21 est connecté en outre à au moins un système, par exemple un système embarqué, apte à fournir une position connue du dispositif mobile 12. Cette position peut par exemple correspondre à la dernière position connue du dispositif mobile 12 ou la position qui a besoin d'être précisée.

Le module de calcul 22 est apte à analyser les données acquises par le module d'entrée 21 afin de fournir un résultat déterminant ou précisant la position du dispositif mobile 12.

Enfin, le module de sortie 23 est apte à fournir le résultat déterminé par le module de calcul 22 à tout système intéressé. Par exemple, le module de sortie 23 est apte à fournir à un écran d'affichage la position et/ou l'attitude déterminée(s) du dispositif mobile 12 pour l'afficher. Selon un autre exemple, le module de sortie 23 est apte à fournir cette position par exemple à un dispositif de précision apte à comparer cette position avec celle fournie par exemple par un système de géolocalisation de type GNSS, afin de fournir une position précise.

Chacun des modules 21 à 23 se présente par exemple sous la forme d'un logiciel mis en œuvre par un processeur adapté. En variante, au moins l'un de ces modules 21 à 23 se présente au moins partiellement sous la forme d'un circuit logique programmable, tel qu'un circuit de type FPGA (de l'anglais « Field Programmable Gate Array »).

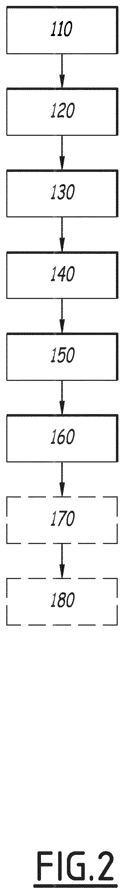

Le procédé de recalage sera désormais expliqué en référence à la figure 2 présentant un organigramme de ses étapes.

Initialement, il est considéré que le dispositif mobile 12 se déplace à proximité des amers 14-1, ..., 14-N et que dans une position fixe, les capteurs 16 effectuent M mesures de gisement et de site par rapport à au moins M amers 14-1, ..., 14-N différents. Par exemple, les capteurs 16 effectuent une mesure de gisement et de site pour chacun des M amers visibles par ces capteurs 16. Avantageusement, selon l'invention, le nombre M peut être supérieur ou égal à 4 et de manière générale, peut correspondre à un nombre quelconque inférieur ou égal à N et supérieur ou égal à 4.

Lors d'une étape initiale 110, le module d'entrée 21 acquiert l'ensemble des M mesures de gisement et de site, et les transmet au module de calcul 22. Par la suite, les mesures de gisement sont dénotées par $g_i$ et les mesures de site sont dénotées par $s_i$, où i correspond à l'indice associé à chacun des M amers et varie donc entre 1 et M.

Lors de la même étape 110, le module d'entrée 21 acquiert en outre les positions des amers 14-1, ..., 14-N ainsi que les précisions associées à ces positions. Ces données sont par exemple issues d'une base de données relative aux amers, telle que définie précédemment.

Lors de l'étape 120 suivante, le module de calcul 22 détermine un écart angulaire pour M-1 couples d'amers 14-1, ..., 14-N.

Ces écarts angulaires sont corrélés mais ne sont pas redondantes.

En outre, ces écarts sont dits « orientés » dans la mesure où ils sont déterminés selon les orientations respectives des amers correspondants par rapport au dispositif mobile 12. Pour déterminer une telle orientation pour chaque couple d'amers, le signe de la différence des mesures de gisement de ces amers est utilisé.

En particulier, un écart angulaire $\Delta_{ij}$ entre un amer ayant l'indice i et un autre amer ayant l'indice j peut être déterminé comme suit :

$$\Delta_{ij} = \mathrm{acos}(\sin s_i \sin s_j + \cos s_i \cos s_j \cos(g_i - g_j))$$

lorsque $\mathrm{sign}(g_i - g_j) < 0,$

et

$$\Delta_{ij} = 2\pi - \mathrm{acos}(\sin s_i \sin s_j + \cos s_i \cos s_j \cos(g_i - g_j))$$

$$\text{lorsque } \text{sign}(g_i - g_j) > 0.$$

Lors de l'étape 130 suivante, le module de calcul 22 détermine une approximation initiale de la position du dispositif mobile à partir desdits écarts angulaires $\Delta_{ij}$ et avantageusement à partir des positions connues des amers correspondants à ces écarts angulaires $\Delta_{ij}$.

Pour cela, le module de calcul 22 applique par exemple un algorithme de type de recuit simulé.

En particulier, le module de calcul 22 initialise l'algorithme sur le barycentre des amers. Autrement dit, le vecteur $X_0$ initialisant l'algorithme peut être déterminée comme suit :

$$X_0 = (A_1 + A_2 + ... + A_M)/M$$

où $A_1, ..., A_M$ sont les positions connues des M amers.

Le module de calcul 22 réalise également un choix optimisé d'un facteur d'énergie, d'un facteur de refroidissement et d'un espace de recherche aléatoire.

Conformément à l'algorithme de type recuit simulé, la fonction d'énergie $f(X)$ est choisie comme la valeur du carré des résidus :

$$\sum_{i=1}^{M-1} (\Delta_{i\ i+1} - \Delta(X, A_i, A_{i+1}))^2$$

où

$\Delta(X, A_i, A_{i+1})$ est un écart angulaire théorique entre l'amer $A_i$ et l'amer $A_{i+1}$ lorsque le dispositif mobile 12 est dans la position $X$.

L'algorithme de type recuit simulé est itéré avec les paramètre suivants :

- seuil d'énergie minimum (pour terminer un recuit) $e_{min}$ = 10$^{-10}$ ;
- seuil d'énergie de sortie (pour terminer les super itérations) $e_s$ = 10$^{-6}$ ;
- température initiale T0 = 10000° ;
- nombre de paliers (itérations) max = kmax = 10000 ;
- nombre maximal de tentatives (relance du recuit simulé sur la dernière solution en cas d'échec) Kmax= 10 ;
- facteur d'énergie : facteur $\alpha$ appliqué à la fonction d'énergie;
- facteur de refroidissement : facteur $\beta$ appliqué à la température à chaque nouveau palier.

La probabilité de conserver une nouvelle solution $x_{n+1}$ d'énergie $f(x_{n+1})$ supérieure à $f(x_n)$ est exprimé comme suit :

$$P(\Delta_e) = e^{-\frac{\alpha.\Delta e}{T}}$$

où $\Delta e = f(x_{n+1}) - f(x_n)$.

Le module de calcul définit en outre les paramètres de facteur d'énergie $\alpha$ et de refroidissement $\beta$ tels que :

- au départ (T=T0) : Probabilité d'augmenter en énergie P(T) = Pmax = 0,5 ;
- à la fin (T=Tmin au bout de kmax itérations de palier) : P(T) = Pmin = 10$^{-3}$ ;

$$P_{max} = e^{-\frac{\alpha \Delta e_0}{T_0}} \text{ avec } \Delta e_0 \cong \frac{1}{10} e_0$$

d'où :

$$\alpha = -\frac{10.T_0.\ln(P_{max})}{e_0} \text{ ;}$$

$$P_{min} = e^{-\frac{\alpha.\Delta e_f}{T_{min}}} \text{ avec } \Delta e_f \cong e_{min} \text{ et } T_{min} = \beta^{kmax}T_0 \text{ ;}$$

d'où :

$$\beta = e^{\left(\frac{1}{k_{max}}ln\left(-\frac{\alpha.e_{min}}{T_0.\ln(P_{min})}\right)\right)}.$$

Le module de calcul 22 définit en outre le voisinage de tirage aléatoire d'une solution voisine comme une zone homothétique de la zone de théâtre de rayon R évoluant entre 1/coef_Rmax = 1/10 du rayon initial Ro de la zone de théâtre (T=T0) vers Rmin = 0,1 m (pour T=Tmin)

$$R(T) = \frac{R_0}{10} + \left(\frac{T_0 - T}{T_0 - T_{min}}\right)\left(\frac{R_0}{10} - R_{min}\right).$$

L'algorithme cœur de recuit simulé consiste à itérer les paliers en abaissant progressivement la température : $T_{n+1} = \beta.T_n$.

Chaque nouvelle solution $x_{n+1}$ est tirée aléatoirement autour de $x_n$ avec un rayon $R_n = R(T_n)$ (différencié en horizontal et en vertical).

Elle est retenue ($x_e = x_{n+1}$) si :

- $\Delta e < 0$ ;

- selon une probabilité $P(\Delta e) = min\left(P_{max}, e^{-\frac{\alpha.\Delta e}{T}}\right)$ si $\Delta e > 0$.

Le critère d'arrêt de l'algorithme cœur est $f(x_n) < e_{min}$ et n = kmax.

Le critère d'arrêt global est $f(x_e) < e_e$ et K = Kmax.

À la fin de cette étape, le module de calcul 22 obtient ainsi une approximation initiale $\hat{X}_{RS}$ de la position du dispositif mobile 12.

Lors de l'étape 140 suivante, le module de calcul 22 détermine une approximation améliorée de la position du dispositif mobile 12 à partir de l'approximation initiale $\hat{X}_{RS}$ et desdits écarts angulaires $\Delta_{ij}$. Cette approximation améliorée est dite également par la suite première approximation de la position du dispositif mobile 12.

Pour cela, le module de calcul 22 utilise un estimateur du maximum de vraisemblance, de préférence un algorithme de type Gauss-Newton.

Cet estimateur a l'expression suivante :

$$u_{i+1} = u_i + (H^t H)^{-1} H.Y$$

où $u_{i+1}$ est la nouvelle solution obtenue à partir de la solution précédente $u_i$ en sachant que $u_0 = \hat{X}_{RS}$.

L'approximation améliorée $\hat{X}_{GN}$ de la position du dispositif mobile 12 est obtenue par itération de Gauss-Newton avec un critère d'arrêt sur la différence de deux solutions consécutives $\|u_{i+1} - u_i\|$ ou sur dépassement d'un nombre d'itérations maximum.

Dans l'expression de l'estimateur ci-dessus, la matrice *H* est une matrice jacobienne (sans prise en compte l'incertitude des mesures) avec une mesure d'écart angulaire relative et la matrice *Y* est une matrice d'écarts entre les écarts mesurés et les écarts théoriques correspondants.

Lorsque M=4, la matrice *Y* peut prendre la forme suivante :

$$Y = \begin{bmatrix} \Delta_{12} - \Delta(u_i, A_1, A_2) \\ \Delta_{23} - \Delta(u_i, A_2, A_3) \\ \Delta_{34} - \Delta(u_i, A_3, A_4) \end{bmatrix}$$

où $\Delta(u_i, A_k, A_m)$ signifie l'écart angulaire théorique entre l'amer $A_k$ et l'amer $A_m$ selon la solution $u_i$ à l'itération *i*.

Lorsque M=4, la matrice H peut prendre la forme suivante :

$$H = \frac{\partial \Delta}{\partial X} = \begin{bmatrix} \dfrac{\partial \Delta_{12}}{\partial X} \\ \dfrac{\partial \Delta_{23}}{\partial X} \\ \dfrac{\partial \Delta_{34}}{\partial X} \end{bmatrix}$$

Autrement dit, en tenant compte des orientations des écarts :

$$H_{i,j} = \text{sign}\big(\sin\big(g_j - g_i\big)\big) . G_{i,j}$$

où :

$$G = \frac{\partial \ddot{\Delta}}{\partial X} = \begin{bmatrix} \dfrac{\partial \ddot{\Delta}_{1,2}}{\partial X} \\ \dfrac{\partial \ddot{\Delta}_{2,3}}{\partial X} \\ \dfrac{\partial \ddot{\Delta}_{3,4}}{\partial X} \end{bmatrix}$$

et

$$\ddot{\Delta}\big(X, A_i, A_j\big) = \text{acos}\left(\frac{\overrightarrow{XA_i} . \overrightarrow{XA_j}}{XA_i . XA_j}\right).$$

Lors de l'étape 150 suivante, le module de calcul 22 détermine des distances entre le dispositif mobile 12 et chacun M amers.

Ces distances peuvent être déterminées comme suit :

$$d(X, A_i) = \big\| \hat{X}_{GN} - A_i \big\|.$$

Ces distances permettent de déterminer les coordonnées sphériques des amers dans un repère du dispositif mobile 12, tel qu'expliqué ci-dessous, et donc les positions mesurées des amers dans ce repère.

Lors de l'étape 160 suivante, le module de calcul 22 détermine une première approximation de l'attitude du dispositif mobile 12 à partir desdites positions mesurées des amers dans le repère du dispositif mobile 12 et avantageusement, à partir des positions connues $A_1, ..., A_M$ des M amers.

Pour cela, le module de calcul 22 détermine par un algorithme de type Kabsch en déterminant une matrice de rotation optimale entre un repère tangent et le repère du dispositif mobile 12. Le repère tangent est un repère terrestre de type NED (signifiant « North », « Est » et « Down » en anglais ou « Nord », « Est », « Bas » en français). Par la suite, les valeurs relatives à ce repère tangent sont référencées par l'indice NED et les valeurs relatives au repère du dispositif mobile 12 sont référencées par l'indice PTF.

En particulier, le module de calcul 22 détermine tout d'abord les barycentres $G_{PTF}$ et $G_{NED}$ des positions des amers dans chacun de ces repères. Autrement dit :

$$G_{PTF} = (A_{1_{PTF}} + A_{2_{PTF}} + ... + A_{M_{PTF}})/M$$

et

$$G_{NED} = (A_{1_{NED}} + A_{2_{NED}} + ... + A_{M_{NED}})/M.$$

Puis, le module de calcul 22 détermine les écarts Q et P de la position de chacun des amers par rapport au barycentre respectivement dans le repère du dispositif mobile 12 et le repère tangent :

$$Q = \begin{pmatrix} A_{1_{PTF}} - G_{PTF} \\ ... \\ A_{M_{PTF}} - G_{PTF} \end{pmatrix}$$

et

$$P = \begin{pmatrix} A_{1_{NED}} - G_{NED} \\ ... \\ A_{M_{NED}} - G_{NED} \end{pmatrix}.$$

La matrice de rotation optimale R est déterminée grâce à la décomposition en valeurs singulières de la matrice $H = P'Q$.

En particulier, en dénotant par $[U,S,V]$ la décomposition en valeurs singulières de la matrice $H$, la matrice de rotation $R$ peut être déterminée comme suit :

$$R = VTU'.$$

La matrice de rotation R peut également s'écrire sous la forme suivante :

$$R = \begin{pmatrix} \cos\theta\cos\Psi & \cos\theta\sin\Psi & -\sin\theta \\ \sin\phi\sin\theta\cos\Psi - \cos\phi\sin\Psi & \cos\phi\cos\Psi + \sin\phi\sin\theta\sin\Psi & \sin\phi\cos\theta \\ \sin\phi\sin\Psi + \cos\phi\sin\theta\cos\Psi & \cos\phi\sin\theta\sin\Psi - \sin\phi\cos\Psi & \cos\phi\cos\theta \end{pmatrix},$$

où $\theta$, $\phi$ et $\Psi$ sont les angles d'Euler correspondant respectivement au tangage, au roulis et au cap du dispositif mobil 12.

Ces angles peuvent être déterminés comme suit :

$$\theta = -\operatorname{asin}(R(1,3)) \; ;$$

$$\phi = \operatorname{asin}(R(2,3)/\cos(\theta)) \; ;$$

et

$$\Psi = \operatorname{atan} 2(R(1,2)/\cos(\theta), R(1,1)/\cos(\theta)).$$

Ces angles $\theta$, $\phi$ et $\Psi$ forment donc une première approximation de l'attitude du dispositif mobile 12.

Les étapes 170 et 180 décrites ci-dessous sont optionnellement mises en œuvre par le module de calcul 22.

En particulier, lors de l'étape 170, le module de calcul 22 détermine des deuxièmes approximations de la position et de l'attitude du dispositif mobile 12 par estimation conjointe. Cette estimation est non biaisée et plus précise que la première approximation. Elle permet également d'estimer les corrélations entre coordonnées de position et coordonnées d'attitude. Autrement dit, l'étape 170 permet d'affiner les premières estimations de l'attitude et de la position du dispositif mobile 12, obtenues précédemment.

Pour mettre en œuvre cette étape 170, le module de calcul 22 utilise par exemple un algorithme de type Levenberg-Marquardt.

En particulier, lors de cette étape 170, le module de calcul 22 met en œuvre les itérations suivantes :

$$u_{n+1} = u_n + (H_n{}^t H_n + \lambda_n)^{-1} H_n{}^t Z_n$$

où

$u_n$ est le vecteur d'état à l'itération $n$ qui est composé du vecteur $X$ correspondant à la position tridimensionnelle ($x, y, z$) du dispositif mobile 12 dans le repère tangent et du vecteur $Y$ correspondant à l'attitude tridimensionnelle du dispositif mobile 12 ;

$u_{n+1}$ est la nouvelle solution obtenue à chaque itération à partir de la solution précédente $u_n$ en sachant que $u_0 = (X_e, Y_e)$ avec $X$, et $Y_e$ correspondant respectivement à la position et à l'attitude du dispositif mobile 12 obtenues lors des

étapes précédentes ;

$\lambda_n$ est un paramètre d'itération avec $\lambda_n = \eta . \lambda_{n-1}$, $\eta$ = 0,999 et $\lambda_0$ = 0,1 ;

$H_n$ est une matrice jacobienne ;

$Z_n$ est une matrice d'écarts des mesures réelles de visée et des mesures théoriques correspondantes.

La matrice jacobienne $H_n$ dans le cas M=4 peut prendre la forme suivante :

$$H(X,Y) = \begin{bmatrix} \dfrac{\partial h_1(X,Y)}{\partial X} & \dfrac{\partial h_1(X,Y)}{\partial Y} \\ \dfrac{\partial h_2(X,Y)}{\partial X} & \dfrac{\partial h_2(X,Y)}{\partial Y} \\ \dfrac{\partial h_3(X,Y)}{\partial X} & \dfrac{\partial h_3(X,Y)}{\partial Y} \\ \dfrac{\partial h_4(X,Y)}{\partial X} & \dfrac{\partial h_4(X,Y)}{\partial Y} \end{bmatrix}.$$

La matrice $Z_n$ est déterminée comme suit :

$$Z = \begin{bmatrix} m_1 - h_1(X_n, Y_n) \\ m_2 - h_2(X_n, Y_n) \\ m_3 - h_3(X_n, Y_n) \\ m_4 - h_4(X_n, Y_n) \end{bmatrix},$$

avec $m_i = u_{PTF}(g_i, s_i)$ est la mesure vectorielle de visée de l'amer $A_i$ (coordonnées sphériques de cet amer dans le repère du dispositif mobile 12).

Dans les expressions des deux matrices $H_n$ et $Z_n$, $h_i(X, Y)$ correspond à la mesure de visée théorique de l'amer $A_i$ dans le repère tangent pour l'état $(X, Y)$ du dispositif mobile 12.

Cette expression $h_i(X, Y)$ prend la forme suivante :

$$h_i(X,Y) = R(Y). u_{NED}(X, A_i)$$

où

$R(Y)$ est la matrice de rotation définie précédemment ; et

$u_{NED}(X, A_i)$ est le vecteur unitaire exprimant la direction $(X, A_i)$ dans le repère tangent NED.

Lors de l'étape 180 suivante, le module de calcul 22 détermine une précision des deuxièmes approximations de l'attitude et de la position du dispositif mobile 12 déterminées lors de l'étape précédente.

Cette précision peut par exemple être calculée comme une borne de Cramer-Rao (*BCR*) en utilisant l'expression suivante :

$$BCR = \left(H_g{}'. B_g{}^{-1}. H_g\right)^{-1}$$

où

$H_g$ est une matrice jacobienne globale (de dimensions 20x18 lorsque M=4) ;

$B_g$ est une matrice de covariances des mesures.

La matrice jacobienne globale $H_g$ est composée d'une matrice jacobienne $H_P$ des mesures de positions tridimensionnelles des amers et d'une matrice jacobienne $H_r$ des relèvements.

Autrement dit :

$$H_g = \begin{pmatrix} H_r \\ H_P \end{pmatrix} = \begin{pmatrix} H & H_{rp} \\ 0 & I_{12} \end{pmatrix},$$

où

$$H_r(X,Y) = \begin{bmatrix} \dfrac{\partial h_1(X,Y)}{\partial X} & \dfrac{\partial h_1(X,Y)}{\partial Y} & \cdots & \dfrac{\partial h_1(X,Y)}{\partial A_j} & \cdots \\[2ex] \dfrac{\partial h_2(X,Y)}{\partial X} & \dfrac{\partial h_2(X,Y)}{\partial Y} & \cdots & \dfrac{\partial h_2(X,Y)}{\partial A_j} & \cdots \\[2ex] \dfrac{\partial h_3(X,Y)}{\partial X} & \dfrac{\partial h_3(X,Y)}{\partial Y} & \cdots & \dfrac{\partial h_3(X,Y)}{\partial A_j} & \cdots \\[2ex] \dfrac{\partial h_4(X,Y)}{\partial X} & \dfrac{\partial h_4(X,Y)}{\partial Y} & \cdots & \dfrac{\partial h_4(X,Y)}{\partial A_j} & \cdots \end{bmatrix}.$$

La matrice de covariances des mesures $B_g$ s'écrit sous la forme suivante :

$$B_g = \begin{bmatrix} B & 0 \\ 0 & B_P \end{bmatrix},$$

où $B$ est une matrice de covariances des mesures de relèvement (de dimension 8x8 lorsque M=4) et $B_P$ est une matrice de covariances des mesures de position des amers (de dimension 12x12 lorsque M=4).

La matrice $B$ est calculée en fonction des mesures de visée $s_i$ et $g_i$ expliquées précédemment.

On conçoit alors que la présente invention présente un certain nombre d'avantages. Tout d'abord, l'invention permet de déterminer ou de préciser la position et l'attitude tridimensionnelles d'un dispositif mobile en utilisant uniquement des mesures de site et de gisement des amers, sans tout autre dispositif de détermination de l'attitude (tel qu'une centrale inertielle par exemple).

En particulier, la solution proposée consiste à décomposer le problème de détermination en deux sous-problèmes :

- estimation de la position tridimensionnelle par une méthode de relèvement, sans utilisation d'un dispositif spécifique de détermination de l'attitude (tel qu'une centrale inertielle par exemple) ;
- estimation de l'attitude.

Enfin, grâce à l'invention, il est possible d'estimer la précision de la solution obtenue.

**Revendications**

1. Procédé de recalage sur une pluralité d'amers (14-1, ..., 14-N) lors de la géolocalisation d'un dispositif mobile (12), comprenant les étapes suivantes :

   - acquisition (110) de mesures de gisement et de site d'au moins quatre amers (14-1, ..., 14-N) dans un repère du dispositif mobile (12) ;
   - détermination (120) d'un écart angulaire pour chacun d'au moins trois couples desdits amers (14-1, ..., 14-N) ;
   - détermination (130) d'une approximation initiale de la position du dispositif mobile (12) à partir desdits écarts angulaires ;
   - détermination (140) d'une approximation améliorée de la position du dispositif mobile (12) à partir de l'approximation initiale et desdits écarts angulaires ;
   - détermination (150) des distances entre le dispositif mobile (12) et chacun desdits amers (14-1, ..., 14-N) ;
   - détermination (160) d'une première approximation de l'attitude du dispositif mobile (12) à partir de positions mesurées desdits amers (14-1, ..., 14-N) dans le repère du dispositif mobile (12) et de positions connues des amers (14-1, ..., 14-N) dans un repère terrestre, lesdites positions mesurées étant obtenues à partir desdites distances.

2. Procédé de recalage selon la revendication 1, dans lequel l'écart angulaire de chaque couple d'amers (14-1, ..., 14-N) est déterminé selon l'orientation respective de ces amers (14-1, ..., 14-N) par rapport au dispositif mobile (12).

3. Procédé de recalage selon la revendication 1 ou 2, dans lequel l'approximation initiale de la position du dispositif mobile (12) est déterminée par un algorithme de type de recuit simulé.

4. Procédé de recalage selon l'une quelconque des revendications précédentes, dans lequel l'approximation améliorée de la position du dispositif mobile (12) est déterminée par un estimateur du maximum de vraisemblance, de préférence en utilisant un algorithme de type Gauss-Newton.

5. Procédé de recalage selon l'une quelconque des revendications précédentes, dans lequel la première approximation de l'attitude du dispositif mobile (12) est déterminée par un algorithme de type Kabsch en déterminant une matrice de rotation optimale entre le repère terrestre et le repère du dispositif mobile (12).

6. Procédé de recalage selon l'une quelconque des revendications précédentes, comprenant en outre une étape (170) de détermination d'une deuxième approximation de l'attitude du dispositif mobile à partir de la première approximation de cette attitude et d'une approximation de la position du dispositif mobile (12), avantageusement de l'approximation améliorée de la position du dispositif mobile (12).

7. Procédé de recalage selon la revendication 6, dans lequel la deuxième approximation de l'attitude du dispositif mobile (12) est déterminée par un algorithme de type Levenberg-Marquardt.

8. Procédé de recalage selon l'une quelconque des revendications précédentes, comprenant en outre une étape (180) de détermination d'une précision de la première ou deuxième approximation de l'attitude du dispositif mobile (12) et/ou de l'approximation améliorée de la position de ce celui-ci.

9. Produit programme d'ordinateur comportant des instructions logicielles qui, lorsque mises en oeuvre par un équipement informatique, mettent en oeuvre le procédé selon l'une quelconque des revendications précédentes.

10. Dispositif de recalage (10) sur une pluralité d'amers (14-1, ..., 14-N) lors de la géolocalisation d'un dispositif mobile (12), comprenant des moyens techniques (21, 22, 23) adaptés pour mettre en oeuvre le procédé selon l'une quelconque des revendications 1 à 8.

**Patentansprüche**

1. Neukalibrierungsverfahren auf einer Vielzahl von Referenzpunkten (14-1, ..., 14-N) bei der Geolokalisierung einer mobilen Vorrichtung (12), umfassend die folgenden Schritte:

- Erfassen (110) von Peilungs- und Standortmessungen von mindestens vier Referenzpunkten (14-1, ... , 14-N) in einem Koordinatensystem der mobilen Vorrichtung (12);
- Bestimmen (120) einer Winkelabweichung für jedes von mindestens drei Paaren der Referenzpunkten (14-1, ... , 14-N);
- Bestimmen (130) einer anfänglichen Näherung der Position der mobilen Vorrichtung (12) anhand der Winkelabweichungen;
- Bestimmen (140) einer verbesserten Näherung der Position der mobilen Vorrichtung (12) anhand der anfänglichen Näherung und der Winkelabweichungen;
- Bestimmen (150) der Abstände zwischen der mobilen Vorrichtung (12) und jedem der Referenzpunkte (14-1, ... , 14-N);
- Bestimmen (160) einer ersten Näherung der Lage der mobilen Vorrichtung (12) anhand von gemessenen Positionen der Referenzpunkte (14-1, ... , 14-N) in dem Koordinatensystem der mobilen Vorrichtung (12) und anhand von bekannten Positionen der Referenzpunkte (14-1, ... , 14-N) in einem Erdkoordinatensystem, wobei die gemessenen Positionen anhand der Abstände erlangt werden.

2. Neukalibrierungsverfahren nach Anspruch 1, wobei die Winkelabweichung von jedem Paar von Referenzpunkten (14-1, ... , 14-N) gemäß der jeweiligen Ausrichtung dieser Referenzpunkte (14-1, ... , 14-N) in Bezug auf die bewegliche Vorrichtung (12) bestimmt wird.

3. Neukalibrierungsverfahren nach Anspruch 1 oder 2, wobei die anfängliche Näherung der Position der mobilen Vorrichtung (12) durch einen Algorithmus vom Typ simulierten Glühens bestimmt wird.

4. Neukalibrierungsverfahren nach einem der vorherigen Ansprüche, wobei die verbesserte Näherung der Position der mobilen Vorrichtung (12) durch einen Maximum-Likelihood-Schätzer bestimmt wird, vorzugsweise unter Verwendung eines Algorithmus vom Typ Gauß-Newton.

**5.** Neukalibrierungsverfahren nach einem der vorherigen Ansprüche, wobei die erste Annäherung an die Lage der mobilen Vorrichtung (12) durch einen Algorithmus vom Typ Kabsch bestimmt wird, indem eine optimale Rotationsmatrix zwischen dem Erdkoordinatensystem
und dem Koordinatensystem der mobilen Vorrichtung (12) bestimmt wird.

**6.** Neukalibrierungsverfahren nach einem der vorherigen Ansprüche, ferner umfassend einen Schritt (170) eines Bestimmens einer zweiten Näherung der Lage der mobilen Vorrichtung anhand der ersten Näherung dieser Lage und einer Näherung der Position der mobilen Vorrichtung (12), vorteilhafterweise der verbesserten Näherung der Position der mobilen Vorrichtung (12).

**7.** Neukalibrierungsverfahren nach Anspruch 6, wobei die zweite Näherung der Lage der mobilen Vorrichtung (12) durch einen Algorithmus vom Typ Levenberg-Marquardt bestimmt wird.

**8.** Neukalibrierungsverfahren nach einem der vorherigen Ansprüche, ferner umfassend einen Schritt (180) eines Bestimmens einer Genauigkeit der ersten oder der zweiten Näherung der Lage der mobilen Vorrichtung (12) und/oder der verbesserten Näherung der Position davon.

**9.** Computerprogrammprodukt, umfassend Softwareanweisungen, die, wenn sie von einer Rechenvorrichtung durchgeführt werden, das Verfahren nach einem der vorherigen Ansprüche durchführen.

**10.** Neukalibrierungsvorrichtung (10) auf einer Vielzahl von Referenzpunkten (14-1, ..., 14-N) bei der Geolokalisierung einer mobilen Vorrichtung (12), umfassend technische Einrichtungen (21, 22, 23), die angepasst sind, um das Verfahren nach einem der Ansprüche 1 bis 8 durchzuführen.

**Claims**

**1.** A method for resetting over a plurality of landmarks (14-1, ..., 14-N) during the geolocation of a mobile device (12), comprising the following steps:

- acquisition (110) of bearing and site measurements of at least four landmarks (14-1, ..., 14-N) in a reference frame of the mobile device (12);
- determination (120) of an angular deviation for each of at least three pairs of said landmarks (14-1, ..., 14-N);
- determination (130) of an initial approximation of the position of the mobile device (12) from said angular deviations;
- determination (140) of an improved approximation of the position of the mobile device (12) from the initial approximation and said angular deviations;
- determination (150) of the distances between the mobile device (12) and each of said landmarks (14-1, ..., 14-N);
- determination (160) of a first approximation of the attitude of the mobile device (12) from measured positions of said landmarks (14-1, ..., 14-N) in the reference frame of the mobile device (12) and known positions of the landmarks (14-1, ..., 14-N) in a terrestrial reference frame, said measured positions being obtained from said distances.

**2.** The method for resetting according to claim 1, wherein the angular deviation of each pair of landmarks (14-1, ..., 14-N) is determined according to the respective orientation of these landmarks (14-1, ..., 14-N) relative to the mobile device (12).

**3.** The method for resetting according to claim 1 or 2, wherein the initial approximation of the position of the mobile device (12) is determined by a simulated annealing type algorithm.

**4.** The method for resetting according to any one of the preceding claims, wherein the improved approximation of the position of the mobile device (12) is determined by a maximum likelihood estimator, preferably using a Gauss-Newton type algorithm.

**5.** The method for resetting according to any one of the preceding claims, wherein the first approximation of the attitude of the mobile device (12) is determined by a Kabsch type algorithm by determining an optimal rotation matrix between the terrestrial reference frame
and the reference frame of the mobile device (12).

6. The method for resetting according to any one of the preceding claims, further comprising a step (170) of the determination of a second approximation of the attitude of the mobile device from the first approximation of this attitude and an approximation of the position of the mobile device (12), advantageously from the improved approximation of the position of the mobile device (12).

7. The method for resetting according to claim 6, wherein the second approximation of the attitude of the mobile device (12) is determined by a Levenberg-Marquardt type algorithm.

8. The method for resetting according to any one of the preceding claims, further comprising a step (180) of the determination of a precision of the first or second approximation of the attitude of the mobile device (12) and/or the improved approximation of the position of the mobile device.

9. A computer program product including software instructions which, when implemented by computer equipment, implement the method according to any one of the preceding claims.

10. A resetting device (10) over a plurality of landmarks (14-1, ..., 14-N) during the geolocation of a mobile device (12), comprising technical means (21, 22, 23) able to implement the method according to any one of claims 1 to 8.

FIG.1

FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3118523 A1
- US 2021375145 A1
- FR 3116602 A1
- FR 3114659 A1
- US 2019072392 A1